# FASCICULE DE BREVET EUROPEEN

(11) **EP 3 207 080 B1**
(45) Date de publication et mention de la délivrance du brevet: **24.04.2019**
(21) Numéro de dépôt: 15775730.3
(22) Date de dépôt: 09.10.2015
(51) Int. Cl.: C08J 5/06, B60C 1/00

(54) **PRODUIT RENFORCE COMPRENANT UNE COMPOSITION COMPRENANT UN SYSTEME OXYDE METALLIQUE ET DERIVE D'ACIDE STEARIQUE EQUILIBRE ET PNEUMATIQUE COMPRENANT LEDIT PRODUIT RENFORCE**
VERSTÄRKTES ELEMENT ENTHALTEND EINE ZUSAMMENSETZUNG ENTHALTEND EIN AUSTARIERTES SYSTEM AUS METALLOXID UND STEARINSÄUREDERIVAT UND REIFEN ENTHALTEND DIESES ELEMENT
REINFORCED PRODUCT COMPRISING A COMPOSITION COMPRISING A BALANCED SYSTEM OF METALLIC OXIDE AND STEARIC ACID DERIVATIVE AND TIRE COMPRISING THIS RINFORCED PRODUCT

(30) Priorité: 13.10.2014 FR 1459809
(43) Date de publication de la demande: 23.08.2017
(73) Titulaire: Compagnie Générale des Etablissements Michelin, 63000 Clermont-Ferrand (FR)
(72) Inventeur: THUILLIEZ, Anne-Lise, F-63040 CLERMONT-FERRAND Cedex 9 (FR)
(74) Mandataire: Louret, Sylvain
(86) Numéro de dépôt international: PCT/EP2015/073423
(87) Numéro de publication internationale: WO 2016/058944

(56) Documents cités:
- EP-A1- 1 098 110
- EP-A1- 2 623 546

## Description

Le domaine de la présente invention est celui des produits renforcés (ou produits semi-fini renforcés) comprenant des éléments de renforcement ou « renforts », métalliques ou textiles, gainés d'une composition polymérique thermoplastique, lesdits renforts gainés étant noyés dans une composition de caoutchouc. Ces produits renforcés ou produits semi-finis renforcés sont utilisables notamment pour renforcer des articles finis ou produits semi-finis complexes en caoutchouc tels que par exemple des pneumatiques pour véhicules automobiles.

Ces produits renforcés ou produits semi-finis renforcés peuvent être utilisés en particulier dans les armatures de carcasse (*"carcass"*) des pneumatiques, le sommet (*"crown"*)*,* ainsi qu'à la protection des armatures de renforcement du sommet encore appelées ceintures (*"belts"*) de ces pneumatiques.

Un pneumatique à armature de carcasse radiale, de manière connue, comporte une bande de roulement, deux bourrelets inextensibles, deux flancs reliant les bourrelets à la bande de roulement et une ceinture disposée circonférentiellement entre l'armature de carcasse et la bande de roulement, cette ceinture et l'armature de carcasse étant constituées de diverses nappes (ou "couches") de caoutchouc renforcées par des éléments de renforcement ou renforts tels que des câblés ou des monofilaments, du type métalliques ou textiles.

Plus précisément, une ceinture de pneumatique est généralement constituée d'au moins deux nappes de ceinture superposées, dites parfois nappes "de travail" ou nappes "croisées", dont les renforts, textiles ou métalliques sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Chacune de ces deux nappes croisées est constituée d'une matrice de caoutchouc ou "gomme d'enrobage" ou encore parfois "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier (*"steel cords")* ou des câblés textiles ("*textile cords*") constitués de fils fins assemblés entre eux par câblage ou retordage.

Pour remplir efficacement leur fonction de renforcement des ceintures de pneumatiques radiaux, soumises comme on le sait à des contraintes très importantes lors du roulage des pneumatiques, ces câbles d'acier ou textiles doivent satisfaire à un très grand nombre de critères techniques, parfois contradictoires, tels qu'une haute endurance en compression, une résistance élevée à la traction, à l'usure et à la corrosion, une forte adhésion au caoutchouc environnant, et être capables de maintenir ces performances à un niveau très élevé aussi longtemps que possible.

L'adhésion entre les câbles, notamment métalliques et le caoutchouc environnant est donc une propriété clé pour l'efficacité des semi-finis renforcés. On connait de l'état de la technique des compositions d'enrobage comprenant un élastomère diénique, notamment du caoutchouc naturel, une charge renforçante, et un système de vulcanisation bien spécifique pour ces compositions. Ce système de vulcanisation comprend usuellement du soufre et de l'oxyde de zinc à des taux élevés, de l'acide stéarique à faible taux, un accélérateur de vulcanisation dit lent et un retardateur de vulcanisation.

Pour éviter la dégradation des câbles métalliques, notamment la consommation du zinc du laiton, on utilise usuellement un taux élevé d'oxyde de zinc et un faible taux d'acide stéarique.

Ce système de vulcanisation spécifique, s'il permet d'obtenir une adhésion satisfaisante entre le câble et la composition de caoutchouc environnante, constitue une forte contrainte lors de la fabrication des semi-finis. Notamment, la processabilité, le temps de cuisson ou le module en allongement peuvent être impactés, provoquant des difficultés de mise en oeuvre, un temps de préparation allongé et donc un coût plus important des semi-finis renforcés. De plus, ce système de vulcanisation spécifique entraine une certaine sensibilité à la thermo-oxydation, entrainant une évolution des mélanges dans le temps, pouvant conduire à une fissuration des mélanges.

Afin de répondre aux inconvénients des systèmes d'enrobage conventionnels, les demanderesses ont à présent découvert un moyen d'utiliser comme gomme d'enrobage pour semi-fini renforcé, une composition pouvant être utilisée avec un système activateur comprenant un oxyde métallique et un dérivé de l'acide stéarique à des taux spécifiques, différents de ceux usuellement utilisés dans les compositions d'enrobage. Cette invention permet un coût moindre des compositions d'enrobage, une production facilité et accélérée des produits renforcés (ou semi-finis renforcés), ainsi qu'une résistance à la thermo-oxydation améliorée dans le temps, réduisant le problème de fissuration du mélange d'enrobage.

En conséquence, un premier objet de l'invention concerne un produit renforcé, utilisable notamment pour le renforcement d'un article fini en caoutchouc, comportant un ou plusieurs fil(s) de renforcement, textile(s) ou métallique(s), ledit ou lesdits fil(s) étant recouverts d'une gaine comprenant une composition polymérique thermoplastique, le(s) fil(s) gainé(s) étant eux-mêmes noyé(s) dans une composition de caoutchouc dite gomme d'enrobage, caractérisé en ce que cette gomme d'enrobage est une composition à base d'au moins un élastomère diénique, une charge renforçante et un système de vulcanisation au soufre, lequel comprend un oxyde métallique et un dérivé de l'acide stéarique en des quantités telles que le rapport du taux d'oxyde métallique et de dérivé d'acide stéarique, en pce, est inférieur à 7, de préférence inférieur à 5.

Cet équilibre du système oxyde métallique et acide stéarique permet d'améliorer le rendement de la vulcanisation et de diminuer le phénomène de réversion.

Préférentiellement, l'invention concerne un produit renforcé tel que défini ci-dessus dans lequel la composition de la gomme d'enrobage comprend de l'oxyde de zinc et de l'acide stéarique en des quantités telles que le rapport du taux d'oxyde de zinc et d'acide stéarique, en pce, est inférieur à 7, de préférence inférieur à 5. Plus préférentiellement, la composition de la gomme d'enrobage comprend de l'oxyde de zinc et de l'acide stéarique en des quantités telles que le rapport du taux d'oxyde de zinc et d'acide stéarique, en pce, est inférieur à 3, de préférence entre 1 et 3.

Préférentiellement également, l'invention concerne un produit renforcé tel que défini ci-dessus dans lequel la composition de la gomme d'enrobage comprend de l'oxyde métallique à un taux inférieur à 7 pce et un dérivé de l'acide stéarique à un taux supérieur à 1 pce. Plus préférentiellement, la composition de la gomme d'enrobage comprend de l'oxyde métallique à un taux compris dans un domaine allant de 1 à 7 pce, de préférence de 2 à 6 pce, plus préférentiellement de 3 à 5 pce. Plus préférentiellement également, la composition de la gomme d'enrobage comprend de l'acide stéarique à un taux compris dans un domaine allant de 1 à 3 pce, de préférence de 1 à 2 pce.

De manière préférentielle, l'invention concerne un produit renforcé tel que défini ci-dessus dans lequel la composition de la gomme d'enrobage est telle que le rapport des quantités, en pce (parties en poids pour cent parties en poids l'élastomère), de soufre et de charge renforçante est inférieur à 0,08. De préférence, le rapport des quantités de soufre et de charge renforçante est inférieur ou égal à 0,06 ; de préférence inférieur ou égal à 0,05.

De préférence, le rapport des quantités de soufre et de charge renforçante est inférieur ou égal à 0,06 ; de préférence inférieur ou égal à 0,05.

De manière préférentielle également, l'invention concerne un produit renforcé tel que défini ci-dessus dans lequel la composition de la gomme d'enrobage comprend un taux de soufre inférieur ou égal à 5 pce, de préférence compris dans un domaine allant de 0,1 à 5 pce. Préférentiellement, la gomme d'enrobage comprend un taux de soufre inférieur ou égal à 3 pce, de préférence compris dans un domaine allant de 0,5 à 3 pce. Plus préférentiellement, la gomme d'enrobage comprend un taux de soufre inférieur ou égal à 2,5 pce, de préférence compris dans un domaine allant de 1 à 2,5 pce.

De manière préférentielle également, l'invention concerne un produit renforcé tel que défini ci-dessus dans lequel la composition de la gomme d'enrobage comprend un accélérateur de vulcanisation présentant un temps de déclanchement de la vulcanisation dit « t0 » inférieur à 3,5 minutes, de préférence inférieur ou égal à 3 minutes. Préférentiellement, l'accélérateur de vulcanisation est choisi dans le groupe constitué par les composés de la famille des thiurames, des dérivés de thiocarbamates, les sulfénamides, les thiophosphates et les mélanges de ces derniers, et dont le t0 est inférieur à 3,5 minutes, de préférence ceux dans le même groupe dont le t0 est inférieur ou égal à 3 minutes. Très préférentiellement, la composition de la gomme d'enrobage comprend le N-cyclohexyl-2-benzothiazol-sulfénamide comme accélérateur de vulcanisation.

De préférence, l'invention concerne un produit renforcé tel que défini ci-dessus dans lequel la composition de la gomme d'enrobage est telle que le rapport entre le taux de soufre et le taux d'accélérateur est strictement inférieur à 4. Préférentiellement, le rapport entre le taux de soufre et le taux d'accélérateur est inférieur ou égal à 3, plus préférentiellement inférieur ou égal à 1,5. De préférence, le rapport entre le taux de soufre et le taux d'accélérateur est compris dans un domaine allant de 0,1 à 4, plus préférentiellement de 0,2 à 3, et très préférentiellement 0,5 à 1,5.

De manière préférentielle, l'invention concerne un produit renforcé tel que défini ci-dessus dans lequel la composition de la gomme d'enrobage ne comprend pas de retardateur de vulcanisation.

De manière préférentielle également, l'invention concerne un produit renforcé tel que défini ci-dessus dans lequel, la composition de la gomme d'enrobage ne comprend pas de sel de cobalt. Préférentiellement, la composition de la gomme d'enrobage ne comprend pas de promoteur d'adhésion.

Préférentiellement, l'invention concerne un produit renforcé tel que défini ci-dessus dans lequel l'élastomère diénique de la composition de la gomme d'enrobage comprend majoritairement un élastomère choisi dans le groupe constitué par le caoutchouc naturel, le polyisoprène de synthèse ou un mélange de ces derniers. De préférence, la composition de la gomme d'enrobage comprend de 60 à 100 pce, de préférence de 70 à 100 pce d'un élastomère choisi dans le groupe constitué par le caoutchouc naturel, le polyisoprène de synthèse ou un mélange de ces derniers. Plus préférentiellement, la composition de la gomme d'enrobage comprend de 80 à 100 pce, de préférence de 90 à 100 pce d'un élastomère choisi dans le groupe constitué par le caoutchouc naturel, le polyisoprène de synthèse ou un mélange de ces derniers.

De préférence, l'invention concerne un produit renforcé tel que défini ci-dessus dans lequel la composition de la gomme d'enrobage comprend de 20 à 80 pce, de préférence de 30 à 70 pce, de charge renforçante. Préférentiellement, la composition de la gomme d'enrobage comprend de 35 à 60 pce, de préférence de 40 à 55 pce, de charge renforçante.

De préférence également, l'invention concerne un produit renforcé tel que défini ci-dessus dans lequel la composition de la gomme d'enrobage comprend du noir de carbone comme charge majoritaire.

De manière préférentielle, l'invention concerne un produit renforcé tel que défini ci-dessus dans lequel le ou les fils de renforcement sont des fils métalliques.

De manière préférentielle également, l'invention concerne un produit renforcé tel que défini ci-dessus dans lequel le(s) fil(s) gainé(s) est revêtu d'une colle, de préférence d'une colle Résorcinol-Formaldéhyde-Latex.

L'invention concerne également un pneumatique comprenant un produit renforcé tel que défini ci-dessus, de préférence au moins dans une nappe choisie parmi les nappes de renforcement du sommet et les nappes de carcasse.

Parmi ces pneumatiques, l'invention concerne notamment des pneumatiques destinés à équiper des véhicules à moteur de type tourisme, SUV (*"Sport Utility Vehicles"*)*,* deux roues (notamment vélos, motos), avions, comme des véhicules industriels choisis parmi camionnettes, "Poids-lourd" c'est-à-dire métro, bus, engins de transport routier (camions, tracteurs, remorques), véhicules hors-la-route tels qu'engins agricoles ou de génie civil, autres véhicules de transport ou de manutention. Egalement, le produit renforcé de l'invention peut être utilisé pour la fabrication de courroies de caoutchouc ou encore pour des bandes transporteuses telles que des tapis roulants.

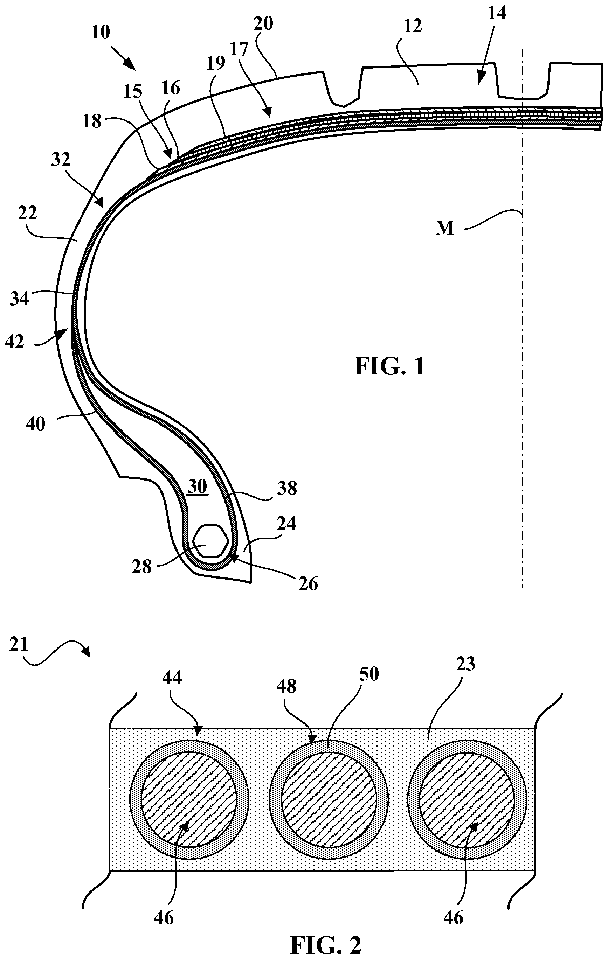

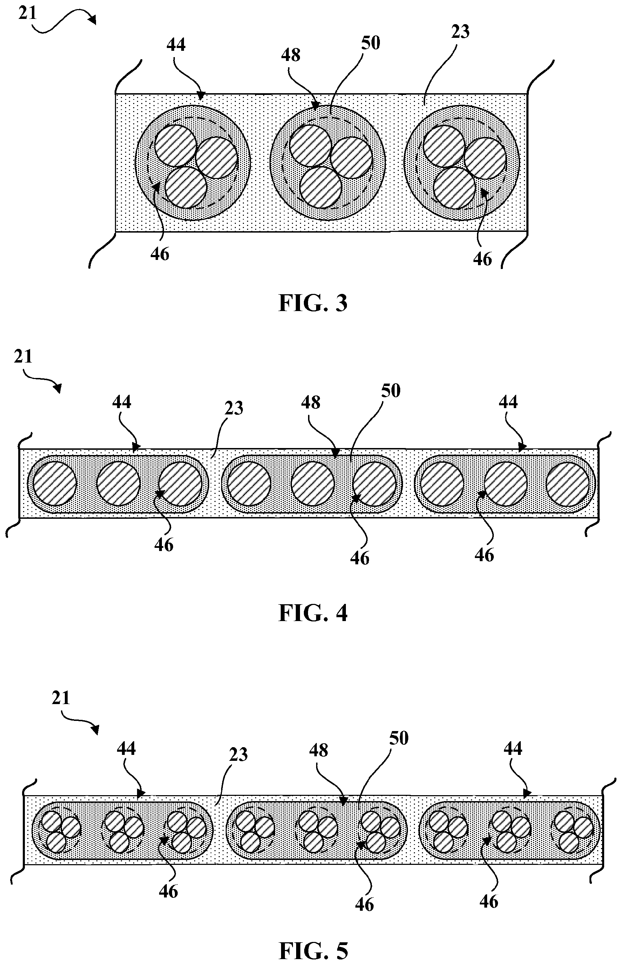

L'invention ainsi que ses avantages seront aisément compris à la lumière de la description et des exemples de réalisation qui suivent, ainsi que des figures relatives à ces exemples qui schématisent :
- en coupe radiale, un bandage pneumatique à armature de carcasse radiale conforme à l'invention, incorporant dans sa ceinture ou dans sa carcasse un produit renforcé selon l'invention (Fig. 1)
- en coupe transversale, un exemple d'un produit renforcé selon l'invention, sous forme de 3 câbles individuellement recouverts d'une gaine, et noyés ensemble dans la composition d'enrobage (Fig. 2) ;
- en coupe transversale, un autre exemple d'un produit renforcé conforme à l'invention, sous forme de 3 groupes de câbles, chaque groupe de câbles étant recouvert d'une gaine, les trois groupes de câbles, gainés, étant noyés dans la composition d'enrobage (Fig. 3) ;
- en coupe transversale, un autre exemple d'un produit renforcé conforme à l'invention, sous forme d'une bandelette de 3 câbles recouverts d'une même gaine et noyés dans la composition d'enrobage (Fig. 4) ;
- en coupe transversale, un autre exemple d'un produit renforcé conforme à l'invention, sous forme d'une bandelette de 3 groupes de câbles recouverts d'une même gaine et noyés dans la composition d'enrobage (Fig. 5).

### DESCRIPTION DETAILLEE DE L'INVENTION

Dans la présente description, sauf indication expresse différente, tous les pourcentages (%) indiqués sont des % en masse.

L'abréviation "pce" (usuellement *"phr"* en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le produit renforcé de l'invention dit aussi « semi-fini renforcé », « renfort composite » est donc un renfort gainé, c'est-à-dire recouvert d'une gaine, puis noyé dans une composition dite d'enrobage, en caoutchouc, à l'état cru ou cuit (réticulé). Il a pour caractéristique essentielle de comporter au moins un (c'est-à-dire un ou plusieurs) fil(s) de renforcement, textile(s) ou métallique(s), ainsi qu'une composition spécifique dite couche de gainage ou gaine, qui recouvre, enrobe individuellement ledit fil ou collectivement plusieurs fils, formant un renfort gainé. Ce renfort gainé est ensuite lui-même noyé dans une composition de caoutchouc, dite composition d'enrobage ou gomme d'enrobage. La structure de ce produit renforcé de l'invention est décrite en détail ci-après.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Dans la présente demande, lorsqu'il est fait référence à un rapport des quantités d'un composé A et d'un composé B, ou un rapport entre le taux d'un composé A et le taux d'un composé B, il s'agit toujours du rapport au sens mathématique de la quantité de composé A sur la quantité de composé B.

### 1 - Renfort gainé

### Fil de renforcement

Dans la présente demande, on entend de manière générale par fil de renforcement (*"reinforcing thread"*) tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. Lorsqu'il est de forme circulaire, son diamètre est de préférence inférieur à 5 mm, plus préférentiellement compris dans un domaine de 0,1 à 2 mm. Ce fil de renforcement peut prendre toute forme connue, il peut s'agir par exemple d'un monofilament élémentaire de diamètre important (par exemple et de préférence égal ou supérieur à 50 µm), d'un ruban élémentaire, d'un film, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'un assemblage, une rangée de fils comportant plusieurs de ces monofilaments, fibres, retors ou câbles regroupés ensemble.

Dans la présente demande, on entend de manière générale par renfort filaire ou renfort gainé, un ou plusieurs fil(s) de renforcement recouvert(s) d'une gaine.

Selon un mode de réalisation préférentiel, le renfort filaire utile aux besoins de l'invention peut donc se présenter sous la forme d'un seul fil de renforcement, recouvert dans sa gaine, pour constituer un fil composite unitaire gainé, noyé dans la composition d'enrobage spécifique de l'invention.

Selon un autre mode de réalisation préférentiel, le renfort filaire utile aux besoins de l'invention peut aussi se présenter sous la forme de plusieurs fils de renforcement (monofilaments, rubans, films, fibres, retors ou câbles) regroupés ensemble, par exemple alignés selon une direction principale, rectiligne ou pas. Ces fils de renforcement sont alors collectivement recouverts dans leur gaine puis noyés dans la composition d'enrobage spécifique de l'invention, pour constituer un produit renforcé selon l'invention, par exemple une bande, bandelette, un tissu composite en caoutchouc de diverses formes telle que ceux usuellement rencontrées dans la structure des pneumatiques. A titre d'exemples préférentiels de produit renforcés conformes à l'invention, on citera particulièrement les tissus constituant les nappes d'armature de carcasse, les nappes sommet de protection, les nappes sommet de frettage ou les nappes sommet de travail présentes dans les ceintures des pneumatiques.

Selon un mode de réalisation préférentiel, le fil de renforcement est un fil de renforcement métallique.

Par métallique, on entend par définition un fil (ou monofilament) constitué majoritairement (c'est-à-dire pour plus de 50% de sa masse) ou intégralement (pour 100% de sa masse) d'un matériau métallique. Chaque monofilament est préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3000 MPa (mesure effectuée en traction selon la norme ISO 6892 de 1984). L'acier peut être revêtu d'une couche adhésive telle que du laiton ou du zinc.

Selon un autre mode de réalisation préférentiel, le fil de renforcement est un fil textile, constitué d'une matière polymérique synthétique ou naturelle, voire d'une matière minérale. A titre d'exemples, on peut citer notamment les fils de renforcement en alcool polyvinylique (PVA), polyamide aliphatique (e.g. polyamides 4-6, 6, 6-6, 11 ou 12), polyamide aromatique (ou "aramide"), polyamide-imide, polyimide, polyester (e.g. PET, PEN), polyester aromatique, polyéthylène, polypropylène, polycétone, cellulose, rayonne, viscose, polyphénylène benzobisoxazole (PBO), verre, carbone ou encore céramique.

### Gaine

Le renfort filaire décrit ci-dessous comprend une gaine, également appelée couche de gainage. Ce type de gaine est bien connu de l'homme du métier. Pour les besoins de l'invention, la gaine comprend une composition polymérique thermoplastique. Dans un mode de réalisation, la gaine comprend une unique couche de la composition polymérique thermoplastique. En variante, la gaine comprend plusieurs couches, au moins l'une d'entre elles comprenant une composition polymérique thermoplastique.

Par composition polymérique thermoplastique, on entend une composition comprenant au moins un polymère ayant les propriétés d'un polymère thermoplastique. La composition peut éventuellement comprendre, en complément, d'autres polymères thermoplastiques, des élastomères et d'autres composants non polymériques.

Parmi les polymères thermoplastiques utiles à la préparation de la gaine, on choisira par exemple et de manière préférentielle un polymère thermoplastique choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6, 6-6 ou un polyamide 11.

Les élastomères pouvant être utilisés dans la composition thermoplastique de la gaine peuvent être préférentiellement de deux types : les élastomères thermoplastiques styréniques et les élastomères diéniques fonctionnalisés. Ces deux types d'élastomères sont décrits ci-dessous.

Les élastomères thermoplastiques styréniques (en abrégé "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). C'est la raison pour laquelle, de manière connue, les copolymères TPS se caractérisent généralement par la présence de deux pics de transition vitreuse, le premier pic (température la plus basse, négative) étant relatif à la séquence élastomère du copolymère TPS, le second pic (température la plus haute, positive, typiquement aux alentours de 80°C ou plus) étant relatif à la partie thermoplastique (blocs styrène) du copolymère TPS. Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène). En cela, bien entendu, ils ne doivent pas être confondus avec des élastomères copolymères diéniques statistiques tels que par exemple des caoutchoucs SIR (copolymères styrène-isoprène) ou SBR (copolymères styrène-butadiène) qui de manière bien connue n'ont aucun caractère thermoplastique.

Le TPS utile à la préparation de la gaine, est de préférence insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

De préférence également, le TPS utile à la préparation de la gaine, est fonctionnalisé, porteur de groupes fonctionnels choisis parmi les groupes ou fonctions époxyde, carboxyle, anhydride ou ester d'acide. Selon un mode de réalisation particulièrement préférentiel, cet élastomère TPS est un élastomère époxydé, c'est-à-dire porteur d'un ou plusieurs groupes époxydes.

De préférence, le TPS utile à la préparation de la gaine, est choisi dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères. De nombreux élastomères TPS sont disponibles dans le commerce. Comme exemple de SBS insaturé et époxydé, on peut citer le "Epofriend" connu et disponible commercialement auprès de la société Daicel.

Parmi les élastomères utiles à la préparation de la gaine, on choisira par exemple et de manière préférentielle un élastomère diénique fonctionnalisé, ledit élastomère étant porteur de groupes fonctionnels choisis parmi les groupes ou fonctions époxyde, carboxyle, anhydride ou ester d'acide. Préférentiellement, les groupes fonctionnels sont des groupes époxydes, c'est-à-dire que l'élastomère diénique est un élastomère diénique époxydé.

Parmi les poly (p phénylène éther) (ou PPE) utiles à la préparation de la gaine, on choisira par exemple et de manière préférentielle un PPE choisi dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1 ,4-phénylène-éther), poly(2-méthoxy-6-éthoxy-1,4-phénylène-éther), poly(2-éthyl-6-stéaryloxy-1,4-phénylène-éther), poly(2,6-dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl-1,4-phénylène-éther), leurs copolymères respectifs, et les mélanges de ces homopolymères ou copolymères. Selon un mode de réalisation particulier et préférentiel, le PPE utilisé est le poly(2,6-diméthyl-1,4-phénylène-éther) également dénommé parfois polyphénylène oxyde (ou, en abrégé, "PPO"). De tels PPE ou PPO commercialement disponibles sont par exemple les PPE de dénomination "Xyron S202" de la société Asahi Kasei, ou les PPE de dénomination "Noryl SA120" de la société Sabic.

De préférence, selon sa composition précise, la gaine comprenant une composition polymérique thermoplastique telle que décrite ci-dessus peut être auto adhérente, c'est-à-dire que sa composition peut être telle qu'elle présente une très bonne adhésion à la composition de caoutchouc environnante, sans nécessiter l'utilisation d'une colle. Ce type de composition polymérique thermoplastique comme gaine auto adhérente est décrit dans les demandes WO2010/136389, WO2010/105975, WO2011/012521, WO2011/051204, WO2012/016757, WO2012/038340, WO2012/038341, WO2012/069346, WO2012/104279, WO2012/104280, WO2012/104281, WO2013/117474 et WO2013/117475.

Alternativement et avantageusement également, la gaine est revêtue d'une couche d'adhésion (colle) entre la gaine et la matrice d'élastomère. La colle utilisée est par exemple du type RFL (Résorcinol-Formaldéhyde-Latex) ou par exemple, telle que décrite dans les publications WO2013017421, WO2013017422, WO2013017423.

### 2 - Composition d'enrobage

### Elastomère diénique

La composition d'enrobage du produit renforcé de l'invention peut contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) tout homopolymère pouvant être obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène (ou isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés. Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplé et/ou étoilé à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités - 1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités - 1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés. Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans 1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis 1,4.

Selon un mode de réalisation préférentiel particulier, l'élastomère diénique est un élastomère majoritairement isoprénique (c'est-à-dire dont la fraction massique d'élastomère isoprénique est la plus grande, comparée à la fraction massique des autres élastomères). Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis 1,4 de synthèse; parmi ces polyisoprènes de synthèse, sont utilisés de préférence des polyisoprènes ayant un taux (% molaire) de liaisons cis 1,4 supérieur à 90%, plus préférentiellement encore supérieur à 98%. Préférentiellement selon ce mode de réalisation, le taux d'élastomère diénique isoprénique est de plus de 50 pce (c'est-à-dire de 50 à 100 pce), plus préférentiellement d'au moins 60 pce (c'est-à-dire de 60 à 100 pce), de manière plus préférentielle d'au moins 70 pce (c'est-à-dire de 70 à 100 pce), plus préférentiellement encore d'au moins 80 pce (c'est-à-dire de 80 à 100 pce) et de manière très préférentielle d'au moins 90 pce (c'est-à-dire de 90 à 100 pce). En particulier selon ce mode de réalisation, le taux d'élastomère diénique isoprénique est très préférentiellement de 100 pce.

### Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Evonik, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

L'homme du métier comprendra qu'à titre de charge équivalente de la silice décrite précédemment, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents, bien connus de l'homme de l'art, étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

L'état physique sous lequel se présente la charge renforçante est indifférent, que ce soit sous forme de poudre, de microperles, de granulés, de billes ou toute autre forme densifiée appropriée.

De manière préférentielle, le taux de charge renforçante totale (noir de carbone et/ou charge inorganique renforçante telle que silice) est de 20 à 80 pce, plus préférentiellement de 30 à 70 pce, de manière très préférentielle, de 35 à 60 pce, mieux de 40 à 55 pce. En dessous de 20 pce de charge, la composition pourrait être moins performante en rigidité en fonction de l'application souhaitée tandis qu'au-dessus de 80 pce de charge, la composition pourrait être moins performante en résistance au roulement.

Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

Selon un mode de réalisation, la composition comprend du noir de carbone comme charge majoritaire, en coupage éventuel avec de la silice, comme charge minoritaire. Dans ce cas, le taux de noir est préférentiellement compris dans un domaine allant de 20 à 80 pce, de préférence de 30 à 70 pce, plus préférentiellement de 35 à 60 pce, mieux de 40 à 55 pce. Dans ce mode de réalisation, le taux de silice est préférentiellement inférieur à 10 pce, et plus préférentiellement de 0 pce.

### Système de vulcanisation

Le système de vulcanisation de la composition d'enrobage du produit renforcé de l'invention est à base de soufre (ou d'un agent donneur de soufre) et d'un système activateur oxyde métallique / dérivé d'acide stéarique équilibré, tel que défini ci-dessous.

Usuellement, les compositions d'enrobage présentent des taux (en pce) d'oxyde de zinc et d'acide stéarique tels que le rapport du taux d'oxyde de zinc et d'acide stéarique est supérieur à 7 et usuellement compris dans un domaine allant de 8 à 15. Dit autrement, il y a usuellement au moins 7 fois plus d'oxyde de zinc que d'acide stéarique, afin d'éviter la dégradation des câbles métalliques, notamment la consommation du zinc du laiton.

Dans les compositions d'enrobage de l'invention, les quantités (en pce) d'oxyde métallique (notamment d'oxyde de zinc) et de dérivé d'acide stéarique (c'est à dire d'acide stéarique ou d'un sel d'acide stéarique, préférentiellement d'acide stéarique) sont telles que le rapport du taux d'oxyde de zinc et d'acide stéarique est inférieur à 7, typiquement entre 1 et 7, de préférence inférieur à 5, typiquement entre 1 et 5, et plus préférentiellement inférieur à 3, typiquement entre 1 et 3. Ce rapport inhabituel dans les compositions d'enrobage permet d'éviter les très forts taux d'oxyde de zinc usuellement utilisés, l'oxyde de zinc relevant le coût des matières premières utilisées. Ce ré-équilibrage du complexe activateur de vulcanisation permet d'améliorer la cinétique de vulcanisation ainsi que le rendement de vulcanisation et de diminuer le phénomène de réversion. Il est à noter par ailleurs que l'acide stéarique permet d'améliorer la mise en oeuvre du mélange et est peu cher, aussi sa proportion plus importante en mélange est favorable à plusieurs titres.

Typiquement, la composition d'enrobage selon l'invention peut comprendre un taux d'oxyde métallique inférieur à 7 pce, alors que les compositions d'enrobage en comprennent habituellement plus de 7 pce. De préférence, le taux d'oxyde métallique est compris dans un domaine allant de 1 à 7 pce, de préférence de 2 à 6 pce de plus préférentiellement de 3 à 5 pce. Le taux de dérivé d'acide stéarique quant à lui est typiquement supérieur à 1 pce, alors que les compositions d'enrobage en comprennent habituellement moins de 1 pce. De préférence, le taux de dérivé d'acide stéarique est compris dans un domaine allant de 1 à 3 pce, plus préférentiellement de 1 à 2 pce.

De préférence, on utilise un système de vulcanisation à base de soufre, à un taux abaissé par rapport aux compositions d'enrobage usuelles. Ainsi, le rapport des quantités, en pce (parties en poids pour cent parties en poids l'élastomère), de soufre et de charge renforçante est de préférence inférieur à 0,08. Plus préférentiellement le rapport des quantités de soufre et de charge renforçante est inférieur ou égal à 0,06 ; de préférence inférieur ou égal à 0,05.

Le soufre est utilisé à un taux préférentiel compris entre 0,1 et 5 pce, plus préférentiellement compris entre 0,5 et 3 pce, en particulier entre 1,5 et 2,5 pce. En dessous de 0,1 pce, la composition pourrait ne pas être suffisamment vulcanisée pour son utilisation comme gomme d'enrobage tandis qu'au-delà de 5 pce, la composition pourrait présenter les inconvénients connus des gommes d'enrobage usuelles, à fort taux de soufre, à savoir une moindre résistance à la thermo-oxydation.

A ce système de vulcanisation de base peuvent venir s'ajouter, incorporés au cours de la première phase non-productive et/ou au cours de la phase productive telles que décrites ultérieurement, divers accélérateurs de vulcanisation connus tels que décrits ci-dessous.

D'une manière générale, les accélérateurs de vulcanisations peuvent être classés en plusieurs catégories, selon qu'ils permettent un déclenchement plus ou moins rapide de la vulcanisation. Ce déclenchement de la vulcanisation peut être représenté par la valeur dite « t0 » de l'accélérateur.

La valeur de t0 pour un accélérateur donné doit être mesurée dans une composition de caoutchouc donnée, à une température de vulcanisation donnée. Afin de comparer les accélérateurs dits lents ou rapides selon leur valeur de t0, on se donne ici comme composition de référence une composition comprenant 100 pce de NR, 47 pce de noir de carbone N326, 0,9 pce d'acide stéarique, 7,5 pce de ZnO, 4,5 pce de soufre, et l'accélérateur dont le t0 est à déterminer, à un taux molaire de 2,3 mmol pour 100 parties en poids d'élastomère (les références commerciales des ingrédients indiqués ici sont identiques à celles des ingrédients utilisés à l'exemple 1). La méthode de mesure du t0 est conforme à la norme DIN-53529, à 150°C. Au sens de la présente demande, le « t0 » signifie le t0 tel que défini et mesuré ci-dessus.

Par exemple, le tableau ci-dessous donne le t0 de certains accélérateurs dans la formule proposée et avec la méthode de mesure proposée.

| | DCBS | TBBS | CBS |
|---|---|---|---|
| Masse molaire (g/mol) | 346,56 | 238,38 | 264,41 |
| t0 (min) | 4,8 | 3,6 | 3,0 |

Ainsi, pour les besoins de la présente demande, on définira comme accélérateur dit lent, un accélérateur dont le t0 est supérieur à 3 minutes, de préférence supérieur à 3,5 minutes. Usuellement pour les compositions d'enrobage, ce sont ce type d'accélérateurs qui sont utilisés, pour une améliorer l'adhésion de la composition au renfort, avec comme inconvénient l'allongement du temps de cuisson du produit renforcé et par conséquent une moindre productivité lors de la fabrication.

La composition d'enrobage du produit renforcé selon l'invention comprend de préférence un accélérateur de vulcanisation dit rapide, dont le t0 est inférieur à 3,5 minutes, de préférence inférieur ou égal à 3 minutes.

De tels accélérateurs dits rapides peuvent être choisis dans le groupe composé des composés de la famille des thiurames, les dérivés de thiocarbamates (dont les sels de dithiocarbamates, par exemple dithiocarbamates de zinc), les sulfénamides, les guanidines, les thiophosphates ou les mélanges de ces derniers.

Parmi les accélérateurs listés ci-dessus, on préfère un accélérateur choisi dans le groupe constitué par les composés de la famille des thiurames, des dérivés de thiocarbamates, les sulfénamides, les thiophosphates ou les mélanges de ces derniers, et dont le t0 est inférieur à 3,5 minutes, de préférence ceux dont le t0 est inférieur ou égal à 3 minutes. De manière très préférentielle, on peut utiliser le N-cyclohexyl-2-benzothiazyle sulfénamide (en abrégé "CBS") qui a un t0 de 3 minutes.

Pour les besoins de la présente invention, le système de vulcanisation est tel que le rapport entre le taux de soufre (c'est-à-dire le taux de soufre de vulcanisation) en pce et le taux d'accélérateur en pce (c'est-à-dire la somme des taux d'accélérateurs s'il y en a plusieurs) est strictement inférieur à 4, préférentiellement inférieur ou égal à 3, plus préférentiellement inférieur ou égal à 1,5. Préférentiellement également, ce rapport est compris dans un domaine allant de 0,1 à 4, plus préférentiellement de 0,2 à 3, et très préférentiellement 0,5 à 1,5.

Dans la présente, on entend par « dérivé d'acide stéarique », de l'acide stéarique ou un sel d'acide stéarique, tous deux étant bien connus de l'homme du métier. A titre d'exemple de sel d'acide stéarique utilisable dans le cadre de la présente invention, on peut citer notamment le stéarate de zinc ou de cadmium.

De manière usuelle dans les compositions d'enrobage, un retardateur de vulcanisation est utilisé, afin de permettre la sulfuration du renfort avant que le soufre ne soit consommé par la vulcanisation. Ce retardateur est bien connu de l'homme du métier, on citera par exemple le N-cyclohexylthiophtalimide (en abrégé « CTP ») commercialisé sous la dénomination « Vulkalent G » par la société Lanxess, le N-(trichlorométhylthio)benzène-sulfonamide commercialisé sous dénomination « Vulkalent E/C » par Lanxess, ou encore l'anhydride phtalique commercialisé sous dénomination « Vulkalent B/C » par Lanxess. Dans la composition d'enrobage du produit renforcé de l'invention, on n'utilise de préférence aucun retardateur de vulcanisation, simplifiant ainsi le mélange et diminuant le coût.

### Autres additifs

La composition d'enrobage du produit renforcé selon l'invention comporte optionnellement également tout ou partie des additifs usuels habituellement utilisés dans les compositions d'élastomères destinées notamment à la fabrication de pneumatiques, comme par exemple des pigments, des agents de protection tels que cires anti-ozone, anti-ozonants chimiques, antioxydants, des agents plastifiants tels que les huiles plastifiantes ou les résines hydrocarbonées bien connues de l'homme de l'art, des résines renforçantes, des accepteurs (par exemple résine phénolique novolaque) ou des donneurs de méthylène (par exemple HMT ou H3M).

Usuellement, les compositions d'enrobage comprennent également un promoteur d'adhésion, par exemple un sel de cobalt. En effet, la composition est utilisée pour la fabrication de produits semi-finis destinés à être au contact d'un ou plusieurs éléments de renfort métallique, par exemple des câbles métalliques. Le sel de cobalt permet une adhésion durable de la composition aux câbles métalliques, notamment à leur revêtement comprenant par exemple du laiton. Toutefois, de tels sels de cobalt sont relativement chers. De plus, on souhaite autant que possible limiter la quantité à employer de ces sels pour réduire leur impact environnemental. Dans la composition d'enrobage du produit renforcé de l'invention, on n'utilise de préférence aucun sel de cobalt et de préférence aucun promoteur d'adhésion.

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les produits renforcés dont la composition d'enrobage est à l'état dit "cru" ou non réticulé (i.e., avant cuisson) ou à l'état dit "cuit" ou réticulé, ou encore vulcanisé (i.e., après réticulation ou vulcanisation).

### Fabrication de la composition d'enrobage

Les compositions de caoutchouc formant la gomme d'enrobage sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de vulcanisation.

Un procédé utilisable pour la fabrication de telles compositions de caoutchouc comporte par exemple et de préférence les étapes suivantes :
- dans un mélangeur, incorporer à l'élastomère diénique et la charge renforçante et les éventuels autres ingrédients de la composition à l'exception du système de vulcanisation, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite le système de vulcanisation ;
- malaxer le tout jusqu'à une température maximale inférieure à 120°C ;
- extruder ou calandrer la composition de caoutchouc ainsi obtenue.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 min.

La composition finale ainsi obtenue est ensuite calandrée par exemple sous la forme d'une feuille ou d'une plaque, notamment pour une caractérisation au laboratoire, ou encore calandrée ou extrudée sous la forme d'une feuille ou d'un profilé de caoutchouc utilisable directement comme gomme d'enrobage d'un renfort gainé, c'est-à-dire d'un (ou plusieurs) fil(s) de renforcement, textile(s) ou métallique(s) ledit ou lesdits fils étant recouverts dans une gaine, comme décrit précédemment.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

### 3 - EXEMPLES DE REALISATION DE L'INVENTION

### 3.1 - Exemples de produits renforcés conformes à l'invention

La figure 1 annexée représente un pneumatique conforme à un premier mode de réalisation de l'invention et désigné par la référence générale 10. Le pneumatique 10 est sensiblement de révolution autour d'un axe sensiblement parallèle à la direction axiale. Le pneumatique 10 est ici destiné à un véhicule de tourisme ou un véhicule poids lourd tel qu'un camion.

Le pneumatique 10 comporte un sommet 12 comprenant une armature de sommet 14 comprenant une armature de travail 15 comprenant deux nappes de travail 16, 18 d'éléments de renfort et une armature 17 de frettage comprenant une nappe de frettage 19. L'armature de sommet 14 est surmontée d'une bande de roulement 20. L'armature de frettage 17, ici la nappe de frettage 19, est radialement intercalée entre l'armature de travail 15 et la bande de roulement 20.

Deux flancs 22 prolongent le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est radialement intercalée entre l'armature de carcasse 32 et la bande de roulement 20. Chaque flanc 22 relie chaque bourrelet 24 au sommet 14.

L'armature de carcasse 32 comporte de préférence une seule nappe de carcasse 34 d'éléments de renfort textiles radiaux. L'armature de carcasse 32 est ancrée à chacun des bourrelets 24 par un retournement autour de la tringle 28 de manière à former dans chaque bourrelet 24 un brin aller 38 s'étendant depuis les bourrelets 24 à travers les flancs 22 jusque dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12.

Chaque nappe de travail 16, 18 forme un produit renforcé 21 selon l'invention comprenant des éléments de renfort 44 formant un angle allant de 15° et 40°, de préférence allant de 20° à 30° et ici égal à 26° avec la direction circonférentielle du pneumatique 10. Les éléments de renfort 44 sont croisés d'une nappe de travail par rapport à l'autre.

La nappe de frettage 19 comprend des éléments de renfort textiles de frettage formant un angle au plus égal à 10°, de préférence allant de 5° à 10° avec la direction circonférentielle du pneumatique 10. En l'espèce, les éléments de renfort textiles de frettage sont des retors réalisés dans un matériau thermorétractile, ici en polyamide 66, chaque retors consistant en deux filés de 140 tex qui ont été retordus ensemble (sur câbleuse directe) à 250 tours/mètre, dont le diamètre est égal à environ 0,66 mm. La contraction thermique CT de chaque élément de renfort textile de frettage est égale à environ 7%.

Les nappes de travail 16, 18, de frettage 19 et de carcasse 34 comprennent une matrice d'élastomère 23 dans laquelle sont noyés les éléments de renfort de la nappe correspondante. Les compositions de caoutchouc des matrices d'élastomère 23 des nappes de travail 16, 18, de frettage 19 et de carcasse 34 peuvent être des compositions conventionnelles pour l'enrobage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs. Au moins l'une des nappes comprenant un produit renforcé comprend un produit renforcé selon l'invention. A ce titre, cette nappe comprend une composition d'enrobage 23 spécifique de l'invention, c'est-à-dire une composition telle que définie ci-avant et ci-après pour les besoins de l'invention.

Les figures 2 à 5 représentent divers modes de réalisation de l'invention, c'est-à-dire divers agencements de produits renforcés 21 selon l'invention. Les éléments de renfort (un ou plusieurs fils) 44 du produit renforcé 21 sont agencés côte à côte selon une direction principale. Les éléments de renfort 44 s'étendent parallèlement les uns aux autres. Chaque élément de renfort 44 comprend au moins un élément filaire 46. Chaque élément de renfort 44 comprend également au moins une gaine 48 revêtant l'élément filaire 46 et comprenant au moins une couche 50 d'une composition polymérique thermoplastique. Le renfort gainé 44 est noyé dans une composition d'enrobage 23.

La gaine 48 comprend une unique couche 50 de la composition polymérique thermoplastique qui peut comprendre un polymère thermoplastique, un élastomère diénique fonctionnalisé, un poly (p-phénylène éther) ou un mélange de ces matériaux. Ici la composition polymérique thermoplastique comprend un polymère thermoplastique, par exemple du polyamide 66. Optionnellement, la composition polymérique thermoplastique pourra comprendre un élastomère diénique fonctionnalisé, par exemple un thermoplastique styrénique comprenant une fonction époxide, carbonyl, anhydride ou ester et/ou un poly-p-phénylène ether. La gaine 48 est revêtue d'une couche d'une colle d'adhésion (non représentée) entre la gaine 48 et la matrice d'élastomère 23.

La différence entre les modes de réalisations présentés dans les figures 2 à 5 réside dans l'arrangement et le nombre des câbles dans la gaine pour former le renfort gainé 44 utile au produit renforcé 21 de l'invention. Ainsi, le renfort gainé 44 est sous forme de 3 câbles individuellement recouverts d'une gaine, et noyés ensemble dans la composition d'enrobage dans la figure 2 ; sous forme de 3 groupes de câbles, chaque groupe de câbles étant recouvert d'une gaine, les trois groupes de câbles, gainés, étant noyés dans la composition d'enrobage dans la figure 3 ; sous forme d'une bandelette de 3 câbles recouverts d'une même gaine et noyés dans la composition d'enrobage dans la figure 4 ; sous forme d'une bandelette de 3 groupes de câbles recouverts d'une même gaine et noyés dans la composition d'enrobage dans la figure 5.

### 3.2 - Utilisation du produit renforcé en pneumatique

Le produit renforcé de l'invention précédemment décrit est notamment utilisable pour la fabrication de tout article fini ou produit semi-fini en caoutchouc, en particulier pour le renforcement de bandages pneumatiques de tous types de véhicules, en particulier véhicules tourisme ou véhicules industriels tels que Poids-lourd.

Comme déjà indiqué précédemment, ce produit renforcé de l'invention peut se présenter sous des formes variées, sous une forme unitaire (avec un seul fil de renforcement) ou encore sous la forme d'une nappe, bande, bandelette ou d'un bloc de caoutchouc dans lesquels sont incorporés, par exemple par calandrage, plusieurs fils de renforcement textile(s) et/ou métallique(s). L'adhésion définitive entre le renfort filaire gainé et la gomme d'enrobage peut être obtenue à l'issue de la cuisson, de préférence sous pression, de l'article fini auquel est destiné le renfort filaire de l'invention.

### 3.3 - Exemple 1 - Tests de caoutchouterie

Pour les besoins de ces essais, des compositions de caoutchouc ont été préparées conformément à l'invention, dont les formulations sont données dans le tableau 1 ; le taux des différents produits est exprimé en pce (parties en poids pour cent parties en poids d'élastomère).

Pour la fabrication de ces compositions, on a procédé de la manière suivante: on a introduit dans un mélangeur interne, dont la température initiale de cuve était d'environ 50°C, successivement la charge renforçante (noir de carbone), l'élastomère diénique, ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 3 à 5 min, jusqu'à atteindre une température maximale de "tombée" de 160°C. On a récupéré le mélange ainsi obtenu, on l'a refroidi puis on a incorporé du soufre et un accélérateur de type sulfénamide sur un mélangeur externe (homo-finisseur) à 40°C, en mélangeant le tout (phase productive) pendant quelques minutes. La composition ainsi obtenue a été ensuite calandrée sous la forme de plaques utilisables comme gomme d'enrobage pour les renforts filaires gainés selon l'invention.

Ces compositions ont été comparées à une composition témoin de formulation similaire préparées de manière identique, dont seul le système de vulcanisation diffère. La composition témoin présente un système de vulcanisation usuel pour une composition d'enrobage tandis que les compositions de l'invention présentent le système de vulcanisation spécifique tel que défini pour l'invention. Les compositions C1 et C2 ne sont pas conformes à l'invention, la composition C3 est conforme à l'invention.

**Tableau 1**

| Formulation : | C-1 | C-2 | C-3 |
|---|---|---|---|
| Caoutchouc naturel (1) | 100 | 100 | 100 |
| Noir de carbone (2) | 47 | 47 | 47 |
| Oxyde de zinc (3) | 7,5 | 7,5 | 3 |
| Acide stéarique (4) | 0,9 | 0,9 | 2,5 |
| 6PPD (5) | 1,5 | 1,5 | 1,5 |
| CTP (6) | 0,15 | - | - |
| Sel de Cobalt | 1,1 | - | - |
| Soufre | 4,5 | 1,6 | 1,6 |
| DCBS (7) | 0,8 | 0,8 | 0,8 |

| | | | |
|---|---|---|---|
| (1) Caoutchouc naturel (peptisé) (2) grade ASTM N326 (société Cabot) ; (3) Oxyde de zinc de grade industriel - société Umicore ; (4) Stéarine « Pristerene 4931 » de la société Uniqema ; (5) N-(1,3-diméthylbutyl)-N'-phényl-p-phénylènediamine (Santoflex 6-PPD) de la société Flexsys ; (6) CTP, N-(cyclohexylthio)phtalimide; commercialisé sous la dénomination « Vulkalent G » par la société Lanxess ou aussi « Duslin P » par la société Duslo ; (7) N-dicyclohexyl-2-benzothiazol-sulfénamide ("Santocure DCBS" de la société Flexsys). | | | |

Les propriétés de ces différentes compositions ont été évaluées et sont présentées dans le tableau 2 ci-dessous. Ces propriétés ont été évaluées à l'initial puis après un vieillissement de la composition, à 77°C et sous une humidité relative de 50%, pendant une durée de 14 jours puis de 28 jours.

Les propriétés mesurées sont les modules des compositions, tels qu'ils sont déterminés lors d'essais de traction. Ces essais permettent de déterminer les contraintes d'élasticité et les propriétés à la rupture. Ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 10% d'allongement (note "MAS10"), à 100% d'allongement ("MAS100") et à 300% d'allongement ("MAS300"). Toutes ces mesures de traction sont effectuées dans les conditions normales de température (23±2°C) et d'hygrométrie (50+5% d'humidité relative), selon la norme française NF T 40-101 (décembre 1979).

**Tableau 2**

| | C-1 | C-2 | C-3 |
|---|---|---|---|
| Temps de cuisson à 140°C (min) | 50 | 50 | 50 |
| MAS10% (MPA) | 5,16 | 3,01 | 3,30 |
| MAS10% (MPA) vieilli 14j | 7,22 (+40%) | 3,92 (+30%) | 4,15 (+26%) |
| MAS10% (MPA) vieilli 28j | 7,73 (+50%) | 3,99 (+33%) | 4,32 (+31%) |
| MAS100% (MPA) | 2,38 | 1,36 | 1,44 |
| MAS100% (MPA) vieilli 14j | 3,61 (+51%) | 1,91 (+40%) | 1,93 (+34%) |
| MAS100% (MPA) vieilli 28j | 4,24 (+78%) | 2,05 (+51%) | 2,15 (+49%) |
| MAS300% (MPA) | 2,43 | 1,60 | 1,73 |
| MAS300% (MPA) vieilli 14j | 3,59 (+48%) | 2,32 (+45%) | 2,37 (+37%) |
| MAS300% (MPA) vieilli 28j | 4,12 (+70%) | 2,46 (+53%) | 2,60 (+50%) |

Les résultats donnés dans le tableau 2 indiquent notamment que la composition C3, conforme à l'invention présente une meilleure résistance au vieillissement thermo-oxydant que la composition C2, qui est identique sauf pour l'équilibre du système activateur oxyde métallique / dérivé d'acide stéarique.

En conclusion, la gomme d'enrobage utilisée dans le produit renforcé de l'invention possède des propriétés de résistance au vieillissement augmentées, conférant par exemple à la nappe carcasse ou à la ceinture d'un pneumatique une protection qui est nettement améliorée contre les risques liés à la thermo-oxydation.

### 3.4 - Exemple 2 - Tests d'adhésion de la composition d'enrobage au renfort filaire

Pour tester l'adhésion de la composition d'enrobage sur un renfort filaire, on a réalisé une mesure selon la norme ASTM D2229.

Les compositions C(a) (témoin) et C(b) (conforme à l'invention) présentées au tableau 3 ci-dessous ont été associées à un renfort métallique laitonné constitué de 2 + 7 fils d'acier à 0,7 % de carbone, de 28/100^{e} millimètres de diamètre avec un pas d'assemblage de 7,5 mm/15 mm, le laiton comprenant 68% de cuivre , gainé et non gainé, comme indiqué au tableau 4 ci-dessous et ces associations ont été testées quant à l'adhésion de la composition d'enrobage au renfort. Dans le cas où le renfort est gainé, la gaine est en Polyamide 6-6 d'environ 0,14 mm d'épaisseur en moyenne pour un diamètre de câble gainé d'environ 1,35 mm, et recouverte d'une colle RFL.

**Tableau 3**

| | C(a) | C(b) |
|---|---|---|
| Caoutchouc naturel (1) | 100 | 100 |
| Noir de carbone (2) | 52 | 52 |
| Oxyde de zinc (3) | 8 | 4 |
| Acide stéarique (4) | 0,5 | 1,5 |
| 6PPD (5) | 1,5 | 1,5 |
| CTP (6) | 0,2 | - |
| Sel de Cobalt | 1 | - |
| Soufre | 6 | 3 |
| DCBS (7) | 1 | - |
| CBS (8) | - | 1 |

| | | |
|---|---|---|
| (1) Caoutchouc naturel (peptisé) (2) grade ASTM N326 (société Cabot) ; (3) Oxyde de zinc de grade industriel - société Umicore ; (4) Stéarine « Pristerene 4931 » de la société Uniqema ; (5) N-(1,3-diméthylbutyl)-N'-phényl-p-phénylènediamine (Santoflex 6-PPD) de la société Flexsys ; (6) CTP, N-(cyclohexylthio)phtalimide; commercialisé sous la dénomination « Vulkalent G » par la société Lanxess ou aussi « Duslin P » par la société Duslo ; (7) N-dicyclohexyl-2-benzothiazol-sulfénamide ("Santocure DCBS" de la société Flexsys) ; (8) N-cyclohexyl-2-benzothiazol-sulfénamide (« Santocure CBS » de la société Flexsys). | | |

**Tableau 4**

| | C(a) | C(b) |
|---|---|---|
| Renfort laitonné | 100 | 65 |
| Renfort laitonné gainé | 143 | 148 |

Les résultats donnés dans le tableau 4 indiquent notamment que la composition C(b), conforme aux besoins de l'invention présente une adhésion détériorée sur un renfort laitonné usuel en pneumatique, tandis que cette même composition, sur un renfort gainé, présente une adhésion similaire voire meilleure que celle de la composition témoin C(a).

Ce résultat, combiné à l'excellente résistance au vieillissement de la composition C(b) comme les compositions présentées à l'exemple 1, illustre tout l'intérêt de l'invention qui permet d'avoir des produits renforcés présentant une adhésion et une résistance au vieillissement nettement améliorés par rapport aux produits renforcés connus jusqu'à présent.

## Revendications

1. Produit renforcé, utilisable notamment pour le renforcement d'un article fini en caoutchouc, comportant un ou plusieurs fil(s) de renforcement, textile(s) ou métallique(s), ledit ou lesdits fil(s) étant recouverts d'une gaine comprenant une composition polymérique thermoplastique, le(s) fil(s) gainé(s) étant eux-mêmes noyé(s) dans une composition de caoutchouc dite gomme d'enrobage, **caractérisé en ce que** cette gomme d'enrobage est une composition à base d'au moins un élastomère diénique, une charge renforçante et un système de vulcanisation au soufre, lequel comprend un oxyde métallique et un dérivé de l'acide stéarique en des quantités telles que le rapport du taux d'oxyde métallique et de dérivé d'acide stéarique, en pce, est inférieur à 7, de préférence inférieur à 5.

2. Produit renforcé selon la revendication 1 dans lequel la composition de la gomme d'enrobage comprend de l'oxyde de zinc et de l'acide stéarique en des quantités telles que le rapport du taux d'oxyde de zinc et d'acide stéarique, en pce, est inférieur à 7, de préférence inférieur à 5.

3. Produit renforcé selon l'une quelconque des revendications précédentes dans lequel la composition de la gomme d'enrobage comprend de l'oxyde métallique à un taux inférieur à 7 pce et un dérivé de l'acide stéarique à un taux supérieur à 1 pce.

4. Produit renforcé selon l'une quelconque des revendications précédentes dans lequel la composition de la gomme d'enrobage est telle que le rapport des quantités, en pce (parties en poids pour cent parties en poids l'élastomère), de soufre et de charge renforçante est inférieur à 0,08.

5. Produit renforcé selon l'une quelconque des revendications précédentes dans lequel la composition de la gomme d'enrobage comprend un accélérateur de vulcanisation présentant un temps de déclanchement de la vulcanisation dit « t0 » inférieur à 3,5 minutes, de préférence inférieur ou égal à 3 minutes.

6. Produit renforcé selon l'une quelconque des revendications précédentes dans lequel la composition de la gomme d'enrobage est telle que le rapport entre le taux de soufre et le taux d'accélérateur est strictement inférieur à 4.

7. Produit renforcé selon l'une quelconque des revendications précédentes dans lequel la composition de la gomme d'enrobage ne comprend pas de retardateur de vulcanisation.

8. Produit renforcé selon l'une quelconque des revendications précédentes dans lequel la composition de la gomme d'enrobage ne comprend pas de sel de cobalt.

9. Produit renforcé selon la revendication précédente dans lequel la composition de la gomme d'enrobage ne comprend pas de promoteur d'adhésion.

10. Produit renforcé selon l'une quelconque des revendications précédentes dans lequel l'élastomère diénique de la composition de la gomme d'enrobage comprend majoritairement un élastomère choisi dans le groupe constitué par le caoutchouc naturel, le polyisoprène de synthèse ou un mélange de ces derniers.

11. Produit renforcé selon l'une quelconque des revendications précédentes dans lequel la composition de la gomme d'enrobage comprend de 20 à 80 pce, de préférence de 30 à 70 pce, de charge renforçante.

12. Produit renforcé selon l'une quelconque des revendications précédentes dans lequel la composition de la gomme d'enrobage comprend du noir de carbone comme charge majoritaire.

13. Produit renforcé selon l'une quelconque des revendications précédentes dans lequel le ou les fils de renforcement sont des fils métalliques.

14. Produit renforcé selon l'une quelconque des revendications précédentes dans lequel le(s) fil(s) gainé(s) est revêtu d'une colle, de préférence d'une colle Résorcinol-Formaldéhyde-Latex.

15. Pneumatique comprenant un produit renforcé selon l'une quelconque des revendications précédentes, de préférence au moins dans une nappe choisie parmi les nappes de renforcement du sommet et les nappes de carcasse.

## Patentansprüche

1. Verstärktes Produkt, das insbesondere zur Verstärkung eines Fertigartikels aus Kautschuk verwendbar ist, umfassend einen oder mehrere textile oder metallische Verstärkungsfäden, wobei der Faden oder die Fäden mit einer Ummantelung überzogen ist oder sind, umfassend eine thermoplastische Polymerzusammensetzung, wobei der (die) ummantelte(n) Faden (Fäden) selbst in eine Kautschukmischung eingebettet ist (sind), die Beschichtungsgummi genannt wird, **dadurch gekennzeichnet, dass** dieser Beschichtungsgummi eine Zusammensetzung auf Basis von mindestens einem Dienelastomer, einem verstärkenden Füllstoff und einem Schwefelvulkanisationssystem ist, welches ein Metalloxid und ein Stearinsäurederivat in derartigen Mengen umfasst, dass das Verhältnis des Gehalts an Metalloxid und Stearinsäurederivat in pce kleiner als 7, vorzugsweise kleiner als 5 ist.

2. Verstärktes Produkt nach Anspruch 1, wobei die Zusammensetzung des Beschichtungsgummis Zinkoxid und Stearinsäure in derartigen Mengen umfasst, dass das Verhältnis des Gehalts an Zinkoxid und Stearinsäure in pce kleiner als 7, vorzugsweise kleiner als 5 ist.

3. Verstärktes Produkt nach einem der vorhergehenden Ansprüche, wobei die Zusammensetzung des Beschichtungsgummis Metalloxid mit einem Gehalt von weniger als 7 pce und ein Stearinsäurederivat mit einem Gehalt von über 1 pce umfasst.

4. Verstärktes Produkt nach einem der vorhergehenden Ansprüche, wobei die Zusammensetzung des Beschichtungsgummis derart ist, dass das Verhältnis der Mengen in pce (Gewichtsteile pro 100 Gewichtsteile Elastomer) von Schwefel und verstärkendem Füllstoff niedriger als 0,08 ist.

5. Verstärktes Produkt nach einem der vorhergehenden Ansprüche, wobei die Zusammensetzung des Beschichtungsgummis einen Vulkanisationsbeschleuniger umfasst, der eine Auslösezeit der Vulkanisation, die "t0" genannt wird, von weniger als 3,5 Minuten, vorzugsweise von weniger als oder gleich 3 Minuten aufweist.

6. Verstärktes Produkt nach einem der vorhergehenden Ansprüche, wobei die Zusammensetzung des Beschichtungsgummis derart ist, dass das Verhältnis des Schwefelgehalts und des Beschleunigergehalts grundsätzlich niedriger als 4 ist.

7. Verstärktes Produkt nach einem der vorhergehenden Ansprüche, wobei die Zusammensetzung des Beschichtungsgummis keinen Vulkanisationsverzögerer umfasst.

8. Verstärktes Produkt nach einem der vorhergehenden Ansprüche, wobei die Zusammensetzung des Beschichtungsgummis kein Kobaltsalz umfasst.

9. Verstärktes Produkt nach dem vorhergehenden Anspruch, wobei die Zusammensetzung des Beschichtungsgummis keinen Haftvermittler umfasst.

10. Verstärktes Produkt nach einem der vorhergehenden Ansprüche, wobei das Dienelastomer der Zusammensetzung des Beschichtungsgummis hauptsächlich ein Elastomer umfasst, das ausgewählt ist aus der Gruppe, die aus Naturkautschuk, synthetischem Polyisopren oder einer Mischung davon besteht.

11. Verstärktes Produkt nach einem der vorhergehenden Ansprüche, wobei die Zusammensetzung des Beschichtungsgummis von 20 bis 80 pce, vorzugsweise von 30 bis 70 pce verstärkenden Füllstoff umfasst.

12. Verstärktes Produkt nach einem der vorhergehenden Ansprüche, wobei die Zusammensetzung des Beschichtungsgummis Ruß als Hauptfüllstoff umfasst.

13. Verstärktes Produkt nach einem der vorhergehenden Ansprüche, wobei der oder die Verstärkungsfäden Metallfäden sind.

14. Verstärktes Produkt nach einem der vorhergehenden Ansprüche, wobei der (die) ummantelte(n) Faden (Fäden) mit einem Klebstoff beschichtet sind, vorzugsweise mit einem Resorcin-Formaldehyd-Latex-Klebstoff.

15. Reifen, umfassend ein verstärktes Produkt nach einem der vorhergehenden Ansprüche, vorzugsweise mindestens in einer Einlage, ausgewählt aus den Scheitelverstärkungseinlagen und den Karkasseneinlagen.

## Claims

1. Reinforced product, which can be used especially for reinforcing a finished rubber article, comprising one or more textile or metallic reinforcing thread(s), said thread(s) being covered with a sheath comprising a thermoplastic polymer composition, the sheathed thread(s) being themselves embedded in a rubber composition referred to as coating rubber, **characterized in that** this coating rubber is a composition based on at least one diene elastomer, a reinforcing filler, and a sulphur-based vulcanization system, which system comprises a metal oxide and a stearic acid derivative in amounts such that the ratio of the content of metal oxide and of stearic acid derivative, in phr, is less than 7, preferably less than 5.

2. Reinforced product according to Claim 1, in which the coating rubber composition comprises zinc oxide and stearic acid in amounts such that the ratio of the content of zinc oxide and of stearic acid, in phr, is less than 7, preferably less than 5.

3. Reinforced product according to any one of the preceding claims, in which the coating rubber composition comprises metal oxide at a content of less than 7 phr and a stearic acid derivative at a content of greater than 1 phr.

4. Reinforced product according to any one of the preceding claims, in which the coating rubber composition is such the ratio of the amounts, in phr (parts by weight per hundred parts by weight of elastomer), of sulphur and of reinforcing filler, is less than 0.08.

5. Reinforced product according to any one of the preceding claims, in which the coating rubber composition comprises a vulcanization accelerator having a vulcanization initiation time, referred to as "t0", of less than 3.5 minutes, preferably of less than or equal to 3 minutes.

6. Reinforced product according to any one of the preceding claims, in which the coating rubber composition is such that the ratio between the sulphur content and the accelerator content is strictly less than 4.

7. Reinforced product according to any one of the preceding claims, in which the coating rubber composition does not comprise vulcanization retarder.

8. Reinforced product according to any one of the preceding claims, in which the coating rubber composition does not comprise cobalt salt.

9. Reinforced product according to the preceding claim, in which the coating rubber composition does not comprise adhesion promoter.

10. Reinforced product according to any one of the preceding claims, in which the diene elastomer of the coating rubber composition predominantly comprises an elastomer selected from the group consisting of natural rubber, synthetic polyisoprene or a mixture thereof.

11. Reinforced product according to any one of the preceding claims, in which the coating rubber composition comprises from 20 to 80 phr, preferably from 30 to 70 phr, of reinforcing filler.

12. Reinforced product according to any one of the preceding claims, in which the coating rubber composition comprises carbon black as predominant filler.

13. Reinforced product according to any one of the preceding claims, in which the reinforcing thread(s) are metallic threads.

14. Reinforced product according to any one of the preceding claims, in which the sheathed thread(s) is coated with an adhesive, preferably a resorcinol-formaldehyde-latex adhesive.

15. Tyre comprising a reinforced product according to any one of the preceding claims, preferably at least in one ply selected from crown reinforcing plies and carcass plies.
